Europäisches Patentamt

European Patent Office

Office européen des brevets

(19)

(11)     EP 1 298 865 A2

(12)     DEMANDE DE BREVET EUROPEEN

(43) Date de publication:
    02.04.2003 Bulletin 2003/14

(51) Int Cl.7: H04L 12/56

(21) Numéro de dépôt: 02292365.0

(22) Date de dépôt: 26.09.2002

(84) Etats contractants désignés:
    AT BE BG CH CY CZ DE DK EE ES FI FR GB GR
    IE IT LI LU MC NL PT SE SK TR
    Etats d'extension désignés:
    AL LT LV MK RO SI

(30) Priorité: 28.09.2001 FR 0112488

(71) Demandeur: Evolium S.A.S.
    75008 Paris (FR)

(72) Inventeur: Herneque, Thierry
    75014 Paris (FR)

(74) Mandataire: El Manouni, Josiane et al
    Compagnie Financière Alcatel,
    Département de Propriété Industrielle
    5, rue Noel Pons
    92734 Nanterre Cedex (FR)

(54)     **Procédé pour améliorer les performances d'un protocole de transmission utilisant un temporisateur de retransmission**

(57)     Procédé pour améliorer les performances d'un protocole de transmission utilisant un temporisateur de retransmission, le délai (RTO) de ce temporisateur de retransmission étant ajusté en fonction de statistiques sur le temps d'aller et retour (RTT), lesdites statistiques incluant une estimation de dispersion, et ledit procédé étant essentiellement caractérisé en ce qu'une gigue est introduite dans ledit temps d'aller et retour (RTT), de manière à en contrôler la dispersion, afin de lui garantir une valeur minimale réduisant la probabilité d'expiration intempestive dudit temporisateur de retransmission.

FIG_3

Expiration du temporisateur de retransmission après une période RTT constant.

RTT
RTO

EP 1 298 865 A2

## Description

La présente invention concerne d'une manière générale les protocoles utilisés dans les systèmes de télécommunications, et plus particulièrement les protocoles conçus pour permettre une transmission de données de manière fiable, sur des réseaux ne garantissant pas eux-mêmes une telle fiabilité. La présente invention est ainsi notamment applicable aux protocoles de type TCP (« Transmission Control Protocol ») utilisés dans les systèmes fonctionnant selon le modèle TCP/IP (« Transmission Control Protocol/Internet Protocol »).

D'une manière générale, pour permettre une transmission de données de manière fiable, ces protocoles utilisent un mécanisme d'acquittement par le récepteur d'unités de données reçues, et de re-transmission par l'émetteur d'unités de données non acquittées. En général, il est aussi prévu un temporisateur de retransmission; ainsi, si aucun acquittement n'est reçu du récepteur à l'expiration de ce temporisateur de retransmission, une re-transmission est automatiquement effectuée.

Un problème délicat à résoudre, notamment dans le cas de protocole de type TCP, est celui du choix du délai pour ce temporisateur de retransmission. En effet, dans un système fonctionnant selon le modèle TCP/IP, le délai de transmission n'est pas prévisible. Dans ces conditions, si le délai du temporisateur de retransmission est choisi trop court, des retransmissions pourront être effectuées inutilement, d'où un accroissement inutile de la charge de trafic dans le réseau et l'introduction possible d'ambiguïtés de retransmission; à l'inverse, si le délai du temporisateur de retransmission est choisi trop long, la qualité de service en termes de délai risque d'être dégradée.

Ces différentes contraintes ont conduit à ajuster en permanence le délai du temporisateur de retransmission (ou RTO, pour « Retransmission Time-Out » en anglais) en fonction de statistiques sur le temps d'aller et retour (ou RTT, pour « Round-Trip Time » en anglais). Ainsi il a été proposé d'utiliser une expression de la forme:

$$RTO = estimated\_mean\_RTT + 4 * estimated\_RTT\_standard\_deviation$$

où RTO est la valeur courante du délai du temporisateur de retransmission, estimated_mean_RTT est l'estimation courante de la valeur moyenne du temps d'aller et retour, et estimated_RTT_standard_deviation est l'estimation courante de l'écart-type du temps d'aller et retour. Les variables estimated_mean_RTT et estimated_RTT_standard_deviation sont obtenues par moyennage à partir de mesures de RTT, une mesure de RTT étant elle-même obtenue par comparaison du temps de réception d'un acquittement avec le temps d'émission des données correspondantes.

Par ailleurs le protocole TCP interprète une expiration du temporisateur de retransmission comme une congestion à l'intérieur du réseau IP, et le débit d'émission est alors réduit.

Pour plus de détails sur le protocole TCP, on pourra se référer notamment à « TCP/IP illustrated, Volume 1, The Protocols » de W.Richard Stevens.

Un nombre croissant de connexions TCP est maintenant établi via des réseaux de radiocommunications mobiles en mode paquet tels que notamment des réseaux de type GSM/GPRS (« Global System for Mobile Communication/ General Packet Radio Service »), ou encore UMTS (pour « Universal Mobile Telecommunications System »).

Dans ces réseaux de radiocommunications mobiles, des techniques spécifiques ont été prévues pour transmettre des données de manière fiable sur l'interface radio. Notamment il est prévu un protocole de type RLC (« Radio Link Control ») incluant lui-même une re-transmission de blocs non acquittés, selon une technique appelée aussi ARQ ( pour "Automatic Repeat reQuest" ).

La mise en oeuvre de la technique ARQ se traduit cependant par un temps de transmission variable en fonction du nombre de répétitions effectivement requises, celui ci dépendant directement de la qualité du canal de communication, très variable dans le cas d'un canal radio. Or, si le protocole TCP permet bien d'ajuster RTO en réponse à des variations relativement lentes de RTT, il ne permet pas en revanche d'ajuster RTO en réponse à des variations rapides de RTT, telles que celles obtenues par mise en oeuvre de la technique ARQ, par exemple dans le cas de conditions radio se dégradant brusquement. Un autre cas d'augmentation soudaine du RTT est celui d'une resélection de cellule où le réseau peut prendre plusieurs secondes avant de déterminer la nouvelle localisation du terminal mobile et poursuivre le transfert.

Dans ce cas, une variation brutale de RTT est obtenue, qui peut avoir pour conséquence une expiration du temporisateur de re-transmission.

On comprend que les mesures prises en réaction par le protocole TCP (à savoir retransmission et réduction de débit) ne sont pas adaptées dans le cas considéré ici, puisque dans ce cas des données sont simplement retardées, par exemple du fait de leur retransmission selon le protocole RLC. Notamment, des données sont alors inutilement retransmises, et cet inconvénient est en outre aggravé par le fait qu'une telle retransmission conduit en général à la retransmission non pas d'une seule unité de données, mais de toutes les unités de données comprises dans une fenêtre appelée fenêtre d'anticipation (le principe d'une telle fenêtre étant bien connu et décrit par exemple dans l'ouvrage précité). Ceci représente alors une perte de débit considérable, particulièrement lorsque de larges fenêtres sont utilisées (64 kilo-octets étant une valeur courante). De plus, ceci génère des acquittements dupliqués, qui à leur tour génèrent de nouvelles retransmisions, ...etc.

Ce problème est aussi connu sous le nom de « spurious timeouts» et « spurious retransmissions » (en anglais), et est mentionné par exemple dans les documents suivants:

- « TCP Performance over GPRS », Michael Meyer, WCNC 1999 IEEE Wireless Communications and Networking Conference (Cat. N° 99[TH]8466), Pt. vol.3, pp. 1248-1252 vol.3, Published : Piscataway, NJ, USA, 1999.
- « The Eifel Algorithm : Making TCP Robust Against Spurious Retransmission » , Reiner Ludwig, Randy H. Katz, Computer Communication review, vol.30, n°1, pp.30-36, Jan . 2000.

Le document « The Eifel Algorithm : Making TCP Robust Against Spurious Retransmission » propose une solution qui consiste à ajouter une information dans l'entête TCP spécifiant si ce segment est transmis pour la première fois ou s'il s'agit d'une retransmission , cette information étant recopiée dans l'acquittement retourné par le récepteur et permettant finalement à l'émetteur de détecter les cas de retransmission intempestive et par suite d'en limiter les effets à la retransmission d'un seul paquet et non de toute la fenêtre d'anticipation. Cette solution implique néanmoins une modification du protocole TCP et une mise à jour de tous les serveurs et terminaux clients souhaitant bénéficier de l'amélioration. En outre, dans le cas de connexions TCP courtes telles que celles rencontrées en téléchargeant un petit objet HTTP (pour « HyperText Transfer Protocol »), la retransmission même d'un seul paquet pourrait représenter plusieurs dizaines de pour-cents de la taille de l'objet.

La présente invention a notamment pour but d'éviter les divers inconvénients précités en annulant ou en réduisant considérablement la probabilité d'apparition des « spurious timeouts ». Plus généralement, la présente invention a pour but d'améliorer les performances de tels protocoles, et donc les performances des systèmes de télécommunications utilisant ces protocoles.

Un des objets de la présente invention est un procédé pour améliorer les performances d'un protocole de transmission utilisant un temporisateur de retransmission, le délai de ce temporisateur de retransmission étant ajusté en fonction de statistiques sur le temps d'aller et retour, lesdites statistiques incluant une estimation de dispersion, et ledit procédé étant essentiellement caractérisé en ce qu'une gigue est introduite dans ledit temps d'aller et retour, de manière à en contrôler la dispersion, afin de lui garantir une valeur minimale réduisant la probabilité d'expiration intempestive dudit temporisateur de retransmission.

Suivant une autre caractéristique, ledit temps d'aller et retour étant lui-même obtenu par comparaison du temps de réception d'un acquittement avec le temps d'émission des données correspondantes, ladite gigue est obtenue en retardant de manière aléatoire l'acheminement desdits acquittements.

Suivant une autre caractéristique, dans un système fonctionnant selon le modèle TCP/IP (« Transmission Control Protocol »), ledit protocole étant de type TCP (« Transmission Control Protocol »), ledit procédé comporte:

- une première étape selon laquelle on détecte des segments TCP, par analyse de l'en-tête de datagrammes IP incidents,
- une deuxième étape selon laquelle on détecte des acquittements contenus dans les segments TCP ainsi détectés, par analyse de l'en-tête de ces segments TCP,
- une troisième étape selon laquelle on retarde de manière aléatoire l'émission des acquittements ainsi détectés.

Suivant une autre caractéristique, au cours de ladite deuxième étape, seuls les acquittements contenus dans des segments TCP ne transportant pas de données de la couche applicative dudit système sont sélectionnés.

Suivant une autre caractéristique, ledit procédé est utilisé pour l'un et/ou l'autre des deux sens de transmission.

Un autre objet de la présente invention est un dispositif pour système de télécommunications mettant en oeuvre un protocole de transmission utilisant un temporisateur de retransmission, le délai de ce temporisateur de retransmission étant ajusté en fonction de statistiques sur le temps d'aller et retour, lesdites statistiques incluant une estimation de dispersion, et ledit dispositif étant essentiellement caractérisé en ce qu'il comporte des moyens pour introduire une gigue dans ledit temps d'aller et retour, de manière à en contôler la dispersion, afin de lui garantir une valeur minimale réduisant la probabilité d'expiration intempestive dudit temporisateur de retransmission.

Suivant une autre caractéristique, ledit temps d'aller-retour étant lui-même obtenu par comparaison du temps de réception d'un acquittement avec le temps d'émission des données correspondantes, lesdits moyens comportent eux-mêmes des moyens pour retarder de manière aléatoire l'acheminement desdits acquittements.

Suivant une autre caractéristique, ledit système fonctionnant selon le modèle TCP/IP (« Transmission Control Protocol »), et ledit protocole étant de type TCP (« Transmission Control Protocol »), ledit dispositif comporte:

- des premiers moyens pour détecter des segments TCP, par analyse de l'en-tête de datagrammes IP incidents,
- des deuxièmes moyens pour détecter des acquittements contenus dans les segments TCP ainsi détectés, par analyse de l'en-tête de ces segments TCP,
- des troisièmes moyens pour retarder de manière aléatoire l'émission des acquittements ainsi sélectionnés.

Suivant une autre caractéristique, lesdits deuxièmes moyens comportent en outre des moyens pour ne sélectionner que les acquittements contenus dans des segments TCP ne transportant pas de données de la couche applicative.

Suivant une autre caractéristique, lesdits moyens sont prévus pour l'un et/ou l'autre des deux sens de transmission.

Suivant une autre caractéristique, ledit système fonctionnant selon le modèle TCP/IP (« Transmission Control Protocol »), ledit protocole étant de type TCP (« Transmission Control Protocol »), et des connexions TCP étant établies via un réseau de radiocommunications mobiles en mode paquet, ledit dispositif est prévu dans un équipement dudit réseau de radiocommunications mobiles en mode paquet.

Suivant une autre caractéristique, ledit réseau de radiocommunications mobiles en mode paquet étant de type GSM/GPRS (« Global System for Mobile Communications/General Packet Radio Service »), et ledit équipement étant de type SGSN (« Serving GPRS Support Node ») ou GGSN (« Gateway GPRS Support Node »), lesdits moyens sont prévus dans une entité de couche SNDCP (« Subnetwork Dépendent Convergence Protocol »), ou GTP (« GPRS Tunnel Protocol »), ou dans une entité ayant une fonction de passerelle (« Relay») située entre SNDCP et GTP.

Suivant une autre caractéristique, ledit réseau de radiocommunications mobiles en mode paquet étant de type UMTS (« Universal Mobile Telecommunication System»), et ledit équipement étant de type 3G-SGSN (« 3rd Generation - Serving GPRS Support Node ») ou GGSN (« 3rd Generation - Gateway GPRS Support Node ») lesdits moyens sont prévus dans une entité de couche GTP-U (« GPRS Tunneling Protocol - User plane»), ou dans une entité ayant une fonction de passerelle (ou "Relay") située au dessus de GTP-U.

Un autre objet de la présente invention est un équipement de réseau de radiocommunications mobiles, comportant un tel dispositif.

Un autre objet de la présente invention est une station mobile, comportant un tel dispositif.

D'autres objets et caractéristiques de la présente invention apparaîtront à la lecture de la description suivante d'exemples de réalisation, faite en relation avec les dessins ci-annexés dans lesquels:

- la figure 1 est un schéma destiné à illustrer un exemple de système auquel la présente invention est applicable, correspondant à titre d'exemple au cas d'un réseau de radiocommunications mobiles en mode paquet de type GSM/GPRS,
- la figure 2 est un schéma destiné à rappeler l'organisation en couches d'un système tel que celui illustré sur la figure 1 par exemple,
- la figure 3 est un diagramme destiné à illustrer le problème résolu par la présente invention,
- la figure 4 est un diagramme destiné à illustrer un exemple de moyens pouvant être prévus pour mettre en oeuvre un procédé suivant l'invention,
- la figure 5 est un schéma destiné à illustrer un exemple de système auquel la présente invention est applicable, correspondant à titre d'exemple au cas d'un réseau de radiocommunications mobiles en mode paquet de type UMTS,
- la figure 6 est un schéma destiné à rappeler l'organisation en couches d'un système tel que celui illustré sur la figure 5 par exemple.

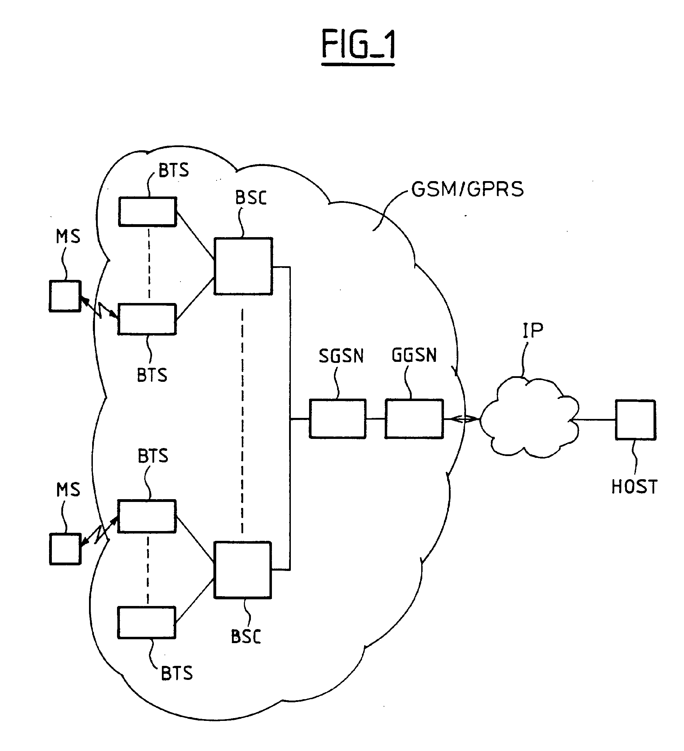

La figure 1 montre un exemple de système dans lequel des connexions TCP peuvent être établies via un réseau de radiocommunications mobiles en mode paquet. A titre d'exemple le réseau de radiocommunications mobiles en mode paquet est un réseau de type GSM/GPRS.

On rappelle qu'un réseau de type GSM/GPRS comporte essentiellement :

- des stations de base ou BTS ("Base Transceiver Station"), en relation avec des stations mobiles ou MS (« Mobile Station»), et des contrôleurs de stations de base ou BSC ("Base Station Controller"), l'ensemble formé par les stations de base et par les contrôleurs de stations de base étant aussi appelé BSS ("Base Station Subsystem"), ou plus généralement réseau d'accès radio,
- des équipements tels que SGSN ("Serving GPRS Support Node"), en relation d'une part avec le BSS, et d'autre part avec des équipements tels que GGSN (« Gateway GPRS Support Node »), eux-mêmes en relation avec des réseaux de données tels que notamment, comme illustré sur la figure 1, un réseau IP, lui-même en relation avec des machines hôtes ou HOST. L'ensemble formé notamment par les équipements SGSN et GGSN est appelé généralement réseau de coeur (ou « Core Network» en anglais).

Selon l'architecture en couches utilisée pour décrire un système tel que celui illustré sur la figure 1, on distingue:

➤ selon le modèle TCP/IP:

• dans une machine hôte ou HOST:

- une couche application,
- une couche transport, dans cet exemple de type TCP («Transmission Control Protocol »),
- une couche réseau, en l'occurrence de type IP (« Internet Protocol »),
- une couche réseau-hôte, elle-même divisée en deux couches, dites « L2 » et « L1 »,

• dans une station mobile MS :

- une couche application, dialoguant avec la couche application de HOST,
- une couche transport, dans cet exemple de type TCP, dialoguant avec la couche transport de HOST,
- une couche réseau, en l'occurrence de type IP,

• dans un équipement GGSN :

- une couche réseau, en l'occurrence de type IP, apte à dialoguer avec la couche IP de HOST (dans le cas simple de la figure) ou de routeurs IP intermédaires,
- une couche réseau-hôte, elle-même divisée en deux couches, L2 et L1, aptes à dialoguer avec les couches correspondantes de HOST,

➤ selon le modèle propre au système GSM/GPRS:

• dans une station mobile MS:

- une couche d'adaptation de la couche IP aux couches inférieures, cette couche d'adaptation étant aussi appelée SNDCP (« Subnetwork Dependent Convergence Protocol »),
- une couche liaison, elle-même divisée en plusieurs couches: LLC (« Logical Link Control »), RLC (« Radio Link Control »), et MAC (« Médium Access Control »),
- une couche physique, appelée aussi « GSM RF »,

• dans le BSS:

1)

- une fonction de passerelle (« Relay »), permettant l'acheminement des unités de données de niveau LLC entre MS et SGSN,

2)

- une couche RLC, dialoguant avec la couche RLC de MS,
- une couche MAC, dialoguant avec la couche MAC de MS,
- une couche GSM RF, dialoguant avec la couche GSM RF de MS,

3)

- une couche BSSGP (« BSS GPRS Protocol »),
- une couche « Network Service »,
- une couche « L1 bis »,

• dans un équipement SGSN:

1)

- une fonction de passerelle (« Relay »), permettant l'acheminement des datagrammes IP entre MS et GGSN,

2)

- une couche SNDCP, dialoguant avec la couche SNDCP de MS,
- une couche LLC, dialoguant avec la couche LLC de MS via la passerelle (« Relay ») de niveau LLC du BSS,
- une couche BSSGP, dialoguant avec la couche BSSGP de BSS,
- une couche « Network Service », dialoguant avec la couche « Network Service » de BSS,
- une couche L1 bis, dialoguant avec la couche L1 bis de BSS,

3)

- une couche « GTP » (« GPRS Tunnel Protocol »),
- une couche « UDP/TCP » (« User Datagram Protocol/Transmission Control Protocol»),
- une couche IP,
- une couche L2,
- une couche L1,

- dans un équipement GGSN :

  - une couche IP, dialoguant avec la couche IP de MS via la passerelle (« Relay ») de niveau IP du SGSN,
  - une couche GTP, dialoguant avec la couche GTP de SGSN,
  - une couche UDP/TCP, dialoguant avec la couche UDC/TCP de SGSN,
  - une couche IP, dialoguant avec la couche IP de SGSN,
  - une couche L2, dialoguant avec la couche L2 de SGSN,
  - une couche L1, dialoguant avec la couche L1 de SGSN.

Pour plus de détails sur cette architecture en couches on pourra se reporter notamment à la spécification 3GPP TS 03.60 version 7.6.0 Release 1998, publiée par le 3GPP (« 3rd Generation Partnership Project »).

Des unités de données (ou segments TCP) sont échangées selon le protocole TCP, ces segments TCP sont contenus dans des paquets (ou datagrammes IP) échangés selon le protocole IP, et ces datagrammes IP sont contenus dans des trames (ou trames LLC) échangées selon le protocole LLC. Les trames LLC sont segmentées dans la couche RLC/MAC, de manière à former des blocs appelés blocs de données RLC (ou « RLC data blocks » en anglais). Les blocs de données RLC sont mis au format requis pour transmission sur l'interface radio, dans la couche physique.

Pour une description détaillée du système GSM/GPRS, on pourra se référer notamment aux spécifications correspondantes, publiées par les organismes de normalisation correspondants.

Comme rappelé précédemment, le protocole TCP met en oeuvre un temporisateur de retransmission, et le délai RTO de ce temporisateur de retransmission est en permance ajusté selon l'expression :

$$RTO = estimated\_mean\_RTT + 4 * estimated\_RTT\_standard\_deviation$$

où RTO (pour « Retransmission Time-Out » en anglais) est la valeur courante du délai du temporisateur de retransmission, estimated_mean_RTT est l'estimation courante de la valeur moyenne du temps d'aller et retour, et estimated_RTT_standard_deviation est l'estimation courante de l'écart-type du temps d'aller et retour. Les variables estimated_mean_RTT et estimated_RTT_standard_deviation sont obtenues par moyennage à partir de mesures de RTT, une mesure de RTT étant elle-même obtenue par comparaison du temps de réception d'un acquittement avec le temps d'émission des données correspondantes.

Ainsi que l'a observé le demandeur, le cas d'expiration intempestive du temporisateur de retransmission (ou « spurious timeout » en anglais) se produit lorsque, après une période où RTT est relativement constant pour des segments TCP consécutifs, c'est-à-dire après une période au cours de laquelle l'écart-type de RTT est faible, RTT présente un accroissement brutal et transitoire (ou « glitch » en anglais) qui fait qu'il devient supérieur à la valeur RTO courante.

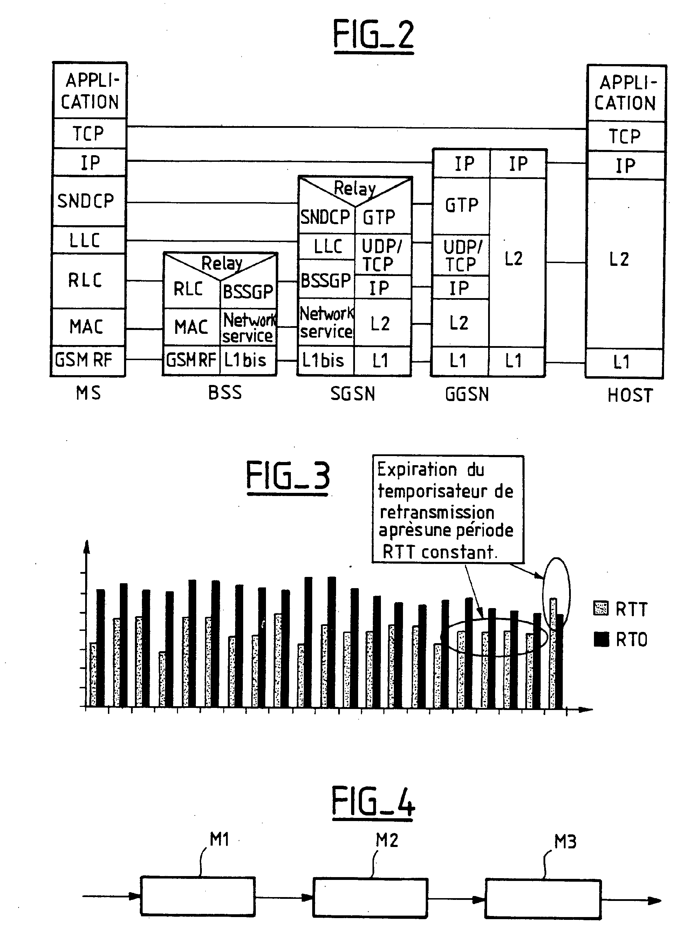

Ce problème peut être illustré par exemple en référence à la figure 3. La figure 3 illustre une population d'échantillons de RTT (en l'occurrence numérotés 1 à 21), et les valeurs correspondantes obtenues pour RTO. En l'occurrence, les échantillons de RTT numérotés 17 à 20 ont une valeur quasiment constante entrainant une diminution progressive de la valeur courante du RTO, et l'échantillon numéroté 21 présente un brusque accroissement (ou « glitch » en anglais), qui fait qu'il devient supérieur à la valeur courante de RTO, cette dernière ne pouvant être ajustée suffisamment rapidement pour en tenir compte.

Pour éviter ce problème, la présente invention propose d'introduire volontairement une variation de phase, ou gigue (ou « jitter » en anglais) dans le temps d'aller et retour RTT, de manière à en contôler la dispersion (notamment, dans cet exemple, l'écart-type), afin de lui garantir une valeur minimale réduisant la probabilité d'expiration intempestive dudit temporisateur de retransmission. En d'autres termes encore, la présente invention permet d'éviter toute période où RTT est quasiment constant, ou encore d'accroître artificiellement l'écart-type (ou plus généralement tout paramètre caractéristique de la dispersion) de RTT, ou encore d'augmenter artificiellement le délai RTO du temporisateur de retransmission, afin de réduire la probabilité d'expiration intempestive du temporisateur de retransmission, ou encore en conservant une marge suffisante entre RTO et RTT, de tenir compte d'accroissements rapides et consécutifs de RTT.

Un autre avantage de la présente invention est que ce résultat peut être obtenu sans aucune modification des implémentations existantes du protocole TCP.

En pratique la gigue introduite ne pouvant être qu'un retard, ceci accroît la valeur de estimated_mean_RTT (valeur moyenne estimée de RTT). Les inconvénients qui en résultent, éventuellement, peuvent être compensés en augmentant la largeur de fenêtre TCP utilisateur (le principe d'une telle fenêtre étant également bien connu, et décrit par exemple dans l'ouvrage précité) par simple configuration des logiciels implémentant le protocole TCP.

Un exemple d'algorithme est maintenant décrit, permettant de retarder de manière aléatoire l'acheminement des acquittements.

On note:

ack_1, ack_2, ...ack_n, ... une suite d'acquittements TCP reçus,

T_ack_1, T_ack_2 ...., T_ack_(n), ... les instants auxquels ces acquittements TCP sont reçus,

T_forward_ack_1, T_forward_ack_2,..., T_forward_ack_(n),... les instants auxquels ces acquittements TCP sont retransmis après application d'un retard.

On note N l'indice de l'acquittement TCP reçu courant. on détermine T_forward_ack(N) par exemple au moyen de l'expression suivante :

$$T\_forward\_ack\_(N) =$$

$$T\_ack\_(N) + rand()*Max\_Delay$$

où rand() est une fonction permettant de fournir un nombre aléatoire dans l'intervalle [0, 1[, et Max_Delay est un délai maximum prédéterminé.

Avantageusement, Max_Delay est un paramètre configurable par l'opérateur du réseau de radiocommunications mobiles. Ainsi la dispersion introduite artificiellement peut être aussi grande que nécessaire et adaptée à chaque situation pour laquelle on souhaite utiliser la présente invention.

La présente invention a également pour objet un dispositif pour la mise en oeuvre d'un procédé suivant l'invention.

D'une manière générale, un dispositif suivant l'invention comporte des moyens pour introduire une gigue dans ledit temps d'aller et retour, de manière à en contrôler la dispersion, afin de lui garantir une valeur minimale réduisant la probabilité d'expiration intempestive dudit temporisateur de retransmission.

Avantageusement, ledit temps d'aller-retour étant lui-même obtenu par comparaison du temps de réception d'un acquittement avec le temps d'émission des données correspondantes, lesdits moyens comportent eux-mêmes des moyens pour retarder de manière aléatoire l'acheminement desdits acquittements.

D'une manière générale, la présente invention peut être implémentée dans tout équipement pour système de télécommunications, par exemple tout équipement d'un système du type illustré sur les figures 1 et 2.

La présente invention est avantageusement implémentée dans un équipement de réseau de radiocommunications mobiles en mode paquet, tel que par exemple, dans un système du type illustré sur les figures 1 et 2, un équipement de type SGSN ou GGSN.

Dans ce cas, l'invention n'est pas implémentée dans la couche TCP elle-même, mais dans une couche telle que par exemple la couche SNDCP ou GTP ou dans la fonction de passerelle (« Relay ») entre ces deux protocoles dans le cas d'un équipement de type SGSN, ou la couche GTP dans le cas d'un équipement de type GGSN. Dans l'une ou l'autre de ces couches, il est possible de récupérer les unités de données, ou paquets, ou datagrammes IP, échangés au niveau de la couche IP.

D'une manière générale, chaque couche ajoute un en-tête (ou « header » en anglais) à des unités de données qu'elle reçoit de la couche supérieure, avant de les passer à la couche inférieure. En l'occurrence, l'en-tête des datagrammes IP contient un champ indiquant le type de protocole (par exemple TCP ou UDP), et l'en-tête des segments TCP contient un champ réservé aux acquittements TCP.

Dans ce cas, on peut prévoir, pour implémenter l'invention, comme illustré sur la figure 4:

- des premiers moyens, notés M1, pour détecter des segments TCP, par analyse de l'en-tête de datagrammes IP incidents,
- des deuxièmes moyens, notés M2, pour détecter des acquittements contenus dans les segments TCP ainsi détectés, par analyse de l'en-tête de ces segments TCP,
- des troisièmes moyens, notés M3, pour retarder de manière aléatoire l'acheminement des acquittements ainsi détectés.

Avantageusement, lesdits deuxièmes moyens comportent en outre des moyens pour ne sélectionner que les acquittements contenus dans des segments TCP ne transportant pas de données de la couche applicative.

Ces différents moyens peuvent bien sûr être implémentés de manière logicielle.

Dans le cas de réseau de radiocommunications mobiles en mode paquet de type GSM/GPRS (« Global System for Mobile Communications/General Packet Radio Service »), lesdits moyens peuvent être prévus dans une entité de couche SNDCP (« Subnetwork Dependent Convergence Protocol »), ou GTP (« GPRS Tunnel Protocol »), ou dans la fonction passerelle (« Relay») entre SNDCP et GTP, dans un équipement de type SGSN (« Serving GPRS Support Node ») ou GGSN (« Gateway GPRS Support Node »).

Un dispositif suivant l'invention pourrait aussi être utilisé dans une station mobile.

Par ailleurs, la présente invention pouvant être utilisée pour chaque sens de transmission, dans chaque cas d'implémentation possible, chaque équipement sera, suivant le cas, considéré comme émetteur (ou source) ou récepteur (ou destinataire).

En outre, dans la description précédente le réseau GSM/GPRS ne constitue qu'un exemple de réseau de radiocommunications mobiles auquel la présente invention est applicable.

L'invention est bien sûr applicable à d'autres types de réseaux, tels que notamment des réseaux de type UMTS.

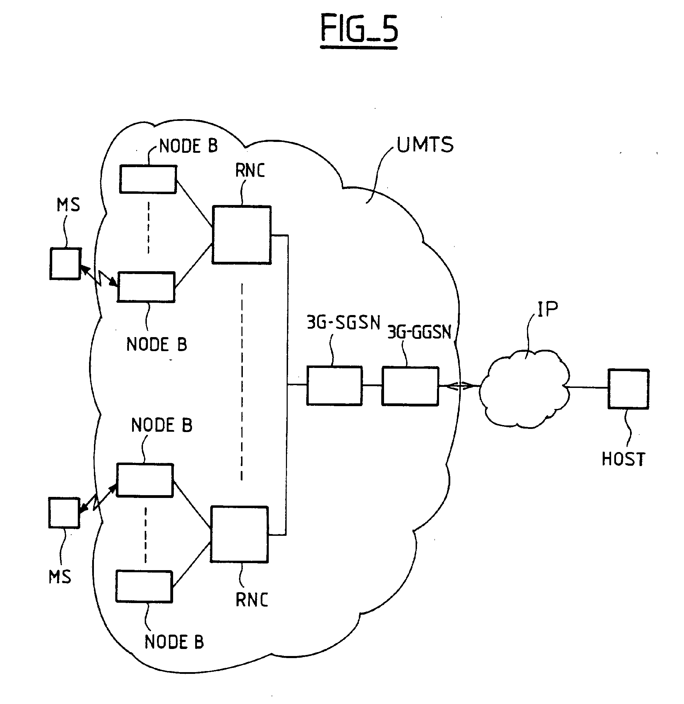

La figure 5 montre ainsi un exemple de système dans lequel des connexions TCP peuvent être établies via un réseau de radiocommunications mobiles en mode paquet, de type UMTS.

Dans les systèmes de type UMTS, le réseau d'accès radio est appelé UTRAN ("UMTS Terrestrial Radio Access Network »), les stations de base sont appelées « Node B », les contrôleurs de stations de base sont appelés RNC ("Radio Network Controller"), et les équipements de type SGSN et GGSN sont appelés respectivement 3G-SGSN et 3G-GGSN (où « 3G » est utilisé pour « 3rd Generation »).

D'une manière générale le système UMTS fait également l'objet de normalisation, et pour plus d'informations, on pourra se reporter aux spécifications correspondantes, publiées par les organismes de normalisation correspondants.

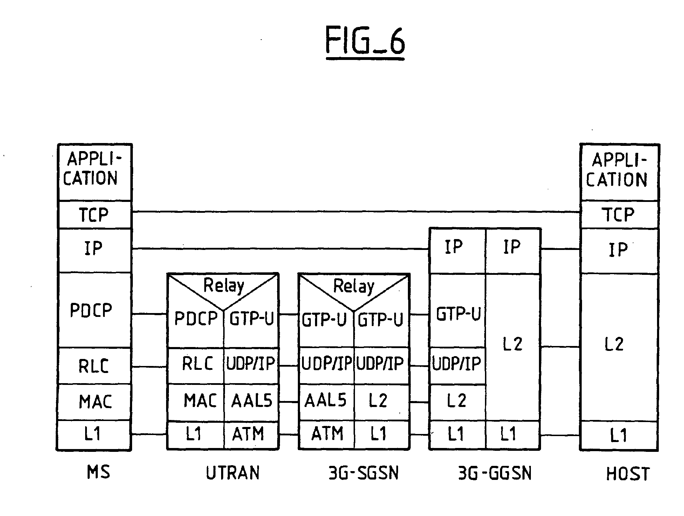

L'architecture en couches d'un système tel que celui illustré sur la figure 5 est rappelée sur la figure 6. Une telle architecture ne sera pas re-décrite en détail ici, d'une part car elle comporte des points communs avec l'architecture rappelée sur la figure 2, et d'autre part pour plus de détails on pourra se reporter notamment à la spécification 3GPP TS 23.060 version 4.1.0 Release 4, publiée par le 3GPP (« 3rd Generation Partnership Project »).

Dans ce type de système, le problème résolu par la présente invention se pose de façon tout à fait similaire à ce qui a été décrit précédemment pour le système GSM/GPRS.

De même, la présente invention peut être implémentée dans tout équipement d'un système du type illustré sur les figures 5 et 6.

La présente invention est avantageusement implémentée dans un équipement de réseau de radiocommunications mobiles en mode paquet, tel que par exemple, dans un système du type illustré sur les figures 5 et 6, un équipement de type 3G-SGSN ou 3G-GGSN.

Dans ce type de système, l'invention peut être implémentée par exemple dans une entité de couche GTP-U (« GPRS Tunneling Protocol-User plane ») dont le rôle est de transporter le trafic IP utilisateur du réseau d'accès (UTRAN) au réseau de coeur (ou « Core Network) puis à l'intérieur du « Core Network », ou dans une entité ayant une fonction de passerelle (ou « Relay ») située au dessus de cette couche GTP-U.

Un dispositif suivant l'invention pourrait aussi être utilisé dans une station mobile, ou équipement utilisateur, ou UE (« User Equipement »).

La présente invention a également pour objet un équipement de réseau de radiocommunications mobiles en mode paquet (tel que notamment un équipement de type SGSN ou 3G-SGSN ou GGSN ou 3G-GGSN) comportant un dispositif permettant de mettre en oeuvre la présente invention.

La présente invention a également pour objet une station mobile (MS) ou un équipement utilisateur (UE) comportant un dispositif permettant de mettre en oeuvre la présente invention.

**Revendications**

1. Procédé pour améliorer les performances d'un protocole de transmission utilisant un temporisateur de retransmission, le délai (RTO) de ce temporisateur de retransmission étant ajusté en fonction de statistiques sur le temps d'aller-retour (RTT), lesdites statistiques incluant une estimation de dispersion, et ledit procédé étant **caractérisé en ce qu'**une gigue est introduite dans ledit temps d'aller-retour (RTT), de manière en contrôler la dispersion, afin de lui garantir une valeur minimale réduisant la probabilité d'expiration intempestive dudit temporisateur de retransmission.

2. Procédé selon la revendication 1, **caractérisé en ce que**, ledit temps d'aller-retour étant lui-même obtenu par comparaison du temps de réception d'un acquittement avec le temps d'émission des données correspondantes, ladite gigue est obtenue en retardant de manière aléatoire l'acheminement desdits acquittements.

3. Procédé selon la revendication 2, **caractérisé en ce que**, dans un système fonctionnant selon le modèle TCP/IP (« Transmission Control Protocol »), ledit protocole étant de type TCP (« Transmission Control Protocol »), ledit procédé comporte:

   - une première étape selon laquelle on détecte des segments TCP, par analyse de l'en-tête de datagrammes IP incidents,
   - une deuxième étape selon laquelle on détecte des acquittements contenus dans les segments TCP ainsi détectés, par analyse de l'en-tête de ces segments TCP,
   - une troisième étape selon laquelle on retarde de manière aléatoire l'acheminement des acquittements ainsi détectés.

4. Procédé selon la revendication 3, **caractérisé en ce que**, au cours de ladite deuxième étape, seuls les acquittements contenus dans des segments TCP ne transportant pas de données de la couche applicative dudit système sont sélectionnés.

5. Procédé selon l'une des revendications 1 à 4, **caractérisé en ce qu'**il est utilisé pour l'un et/ou l'autre des deux sens de transmission.

6. Dispositif pour système de télécommunications mettant en oeuvre un protocole de transmission utilisant un temporisateur de retransmission, le délai (RTO) de ce temporisateur de retransmission étant ajusté en fonction de statistiques sur le temps d'aller et retour (RTT), lesdites statistiques incluant une estimation de dispersion, et ledit dispositif étant **caractérisé en ce qu'**il comporte des moyens pour introduire une gigue dans ledit temps d'aller et retour (RTT), de manière à en contrôler la dispersion, afin de lui garantir une valeur minimale réduisant la probabilité d'expiration intempestive dudit temporisateur de retransmission.

7. Dispositif selon la revendication 6, **caractérisé en ce que**, ledit temps d'aller-retour étant lui-même obtenu par comparaison du temps de réception d'un acquittement avec le temps d'émission des données correspondantes, lesdits moyens comportent eux-mêmes des moyens pour retarder de manière aléatoire l'acheminement desdits acquittements.

8. Dispositif selon l'une des revendications 6 et 7, **caractérisé en ce que**, ledit système fonctionnant selon le modèle TCP/IP (« Transmission Control Protocol »), et ledit protocole étant de type TCP (« Transmission Control Protocol »), ledit dispositif comporte:

   - des premiers moyens (M1) pour détecter des segments TCP, par analyse de l'en-tête de datagrammes IP incidents,
   - des deuxièmes moyens (M2) pour détecter des acquittements contenus dans les segments TCP ainsi détectés, par analyse de l'en-tête de ces segments TCP,
   - des troisièmes moyens (M3) pour retarder de manière aléatoire l'émission des acquittements ainsi détectés.

9. Dispositif selon la revendication 8, **caractérisé en ce que** lesdits deuxièmes moyens comportent en outre des moyens pour ne sélectionner que les acquittements contenus dans des segments TCP ne transportant pas de données de la couche applicative dudit système.

10. Dispositif selon l'une des revendications 6 à 9, **caractérisé en ce que** lesdits moyens sont prévus pour l'un et/ou l'autre des deux sens de transmission.

11. Dispositif selon l'une des revendications 6 à 10, **caractérisé en ce que**, ledit système fonctionnant selon le modèle TCP/IP (« Transmission Control Protocol »), ledit protocole étant de type TCP (« Transmission Control Protocol »), et des connexions TCP étant établies via un réseau de radiocommunications mobiles en mode paquet, ledit dispositif est prévu dans un équipement dudit réseau de radiocommunications mobiles en mode paquet.

12. Dispositif selon la revendications 11, **caractérisé en ce que** ledit réseau de radiocommunications mobiles en mode paquet étant de type GSM/GPRS (« Global System for Mobile Communications/General Packet Radio Service »), et ledit équipement étant de type SGSN (« Serving GPRS Support Node ») ou GGSN (« Gateway GPRS Support Node »), lesdits moyens sont prévus dans une entité de couche SNDCP (« Subnetwork Dependent Convergence Protocol »), ou GTP (« GPRS Tunnel Protocol »), ou dans une entité ayant une fonction de passerelle ( « Relay») située au-dessus de SNDCP et GTP.

13. Dispositif selon l'une des revendications 11, **caractérisé en ce que** ledit réseau de radiocommunications mobiles étant de type UMTS (« Universal Mobile Telecommunication System»), et ledit équipement étant de type 3G-SGSN (« 3$^{rd}$ Generation - Serving GPRS Support Node ») ou GGSN (« 3$^{rd}$ Generation - Gateway GPRS Support Node »), lesdits moyens sont prévus dans une entité de couche GTP-U (« GPRS Tunneling Protocol - User plane »), ou dans une entité ayant une fonction de passerelle ("Relay") située au dessus de GTP-U.

14. Equipement de réseau de radiocommunications mobiles en mode paquet, **caractérisé en ce qu'**il comporte un dispositif selon l'une des revendications 11 à 13.

15. Station mobile, **caractérisée en ce qu'**elle comporte un dispositif selon l'une des revendications 11 à 13.

# FIG_1

## FIG_2

| MS | BSS | | SGSN | | GGSN | | HOST |
|---|---|---|---|---|---|---|---|
| APPLI-CATION | | | | | | | APPLI-CATION |
| TCP | | | | | | | TCP |
| IP | | | | IP | IP | | IP |
| SNDCP | | | Relay | | GTP | | |
| | | | SNDCP / GTP | | | | |
| LLC | | | LLC / UDP/TCP | | UDP/TCP | L2 | L2 |
| RLC | Relay | | BSSGP / IP | | IP | | |
| | RLC / BSSGP | | | | | | |
| MAC | MAC / Network service | | Network service / L2 | | L2 | | |
| GSM RF | GSMRF / L1bis | | L1bis / L1 | | L1 | L1 | L1 |

## FIG_3

Expiration du temporisateur de retransmission après une période RTT constant.

▨ RTT
■ RTO

## FIG_4

M1    M2    M3

# FIG_5

EP 1 298 865 A2

# FIG_6

14